# EUROPEAN PATENT SPECIFICATION

(11) **EP 3 386 045 B1**
(45) Date of publication and mention of the grant of the patent: **19.05.2021**
(21) Application number: 16870389.0
(22) Date of filing: 07.11.2016
(51) Int. Cl.: H02B 1/28, H02B 13/025

(54) **GAS-INSULATED SWITCHGEAR**
GASISOLIERTES SCHALTGETRIEBE
APPAREILLAGE DE CONNEXION À ISOLATION GAZEUSE

(30) Priority: 02.12.2015 JP 2015235315
(43) Date of publication of application: 10.10.2018
(73) Proprietor: Mitsubishi Electric Corporation, Chiyoda-ku Tokyo 100-8310 (JP)
(72) Inventor: INOUE Naoaki, Tokyo 100-8310 (JP)
(74) Representative: Sajda, Wolf E.
(86) International application number: PCT/JP2016/082954
(87) International publication number: WO 2017/094449

(56) References cited:
- EP-A1- 1 463 174
- EP-A2- 2 178 182
- AT-U1- 2 759
- CN-U- 203 103 827
- GB-A- 2 519 806
- JP-A- 2009 081 910
- JP-A- 2009 081 910
- JP-U- H01 109 206
- JP-U- H01 109 206
- JP-U- S58 145 001
- JP-U- S58 145 001

## Description

### Technical Field

The present invention relates to a gas-insulated switching device, and in particular, relates to a gas-insulated switching device having a pressure releasing structure such that high-temperature, high-pressure gas generated when an arc fault occurs in a device interior is discharged to a device exterior.

### Background Art

A gas-insulated switching device is a switching device wherein an instrument such as a circuit breaker is housed in a single vessel filled with sulfur hexafluoride (SF6) gas or the like, which has high insulating properties. Further, the gas-insulated switching device is such that the instrument is rendered more compact owing to the excellent insulating performance of the sulfur hexafluoride (SF6) gas, which contributes to a contraction of space occupied by an electrical chamber.

Also, when an internal arc fault occurs in the gas-insulated switching device, the safety of a person on a periphery of the gas-insulated switching device is required. When an internal arc fault occurs in the gas-insulated switching device, the inside of the gas-insulated switching device reaches a high temperature and high pressure, because of which the rigidity of a frame of the gas-insulated switching device needs to be strengthened in order to withstand the high temperature, high pressure state.

Also, a configuration such that high-temperature, high-pressure gas is discharged to a device exterior by a pressure releasing portion being attached to the frame is common as a countermeasure for when an internal arc fault occurs in the gas-insulated switching device.

### List of Citations

### Patent Literature

Patent Document 1: JP-A-2014-96882
Patent Document 2: WO 2013-099393
Patent Document 3: Japanese Patent No. 3,664,845
Patent Document 4: JP-A-9-271119
Patent Document 5 Japanese Unexamined Utility Model (Registration)
   Application Publication No. 58-14500

A gas-insulated switchgear with a cable, circuit-breaker and bus chambers with pressure release plates is further disclosed in EP1463174 A1.

### Summary of the Invention

### Technical Problem

However, an existing metal-enclosed type switchgear as disclosed in, for example, Patent Document 1 shows a configuration such that separate instruments are housed in upper and lower levels of the switchgear, forming two feeder circuits. Further, Patent Document 1 discloses a configuration such that when an internal arc fault occurs in the lower level side compartment, a pressure releasing plate in an upper portion on the lower level side is opened, releasing pressure to the upper level side.

In Patent Document 1, however, there is a problem in that the upper level side feeder circuit is also damaged by the effect of high-temperature, high-pressure gas released from the lower level side to the upper level side.

Also, an existing electrical chamber disclosed in Patent Document 2 shows a configuration such that high-temperature, high-pressure gas generated in a switchgear is released to an exterior of an electrical chamber in which the switchgear is housed.

However, there is a problem in that safety with respect to the high-temperature, high-pressure gas discharged from an exhaust opening of the electrical chamber is not secured, and in some cases a separate room is needed for processing the high-temperature, high-pressure gas discharged to the electrical chamber exterior, whereby space occupied by the electrical chamber as a whole increases.

Furthermore, an existing metal-enclosed type switchgear disclosed in Patent Document 3 is of a configuration having pressure releasing plates connecting to a common pressure releasing duct chamber from each compartment, wherein pressure is released from the common pressure releasing duct chamber regardless of which compartment an internal arc fault occurs in.

However, as the pressure releasing plates do not hermetically seal the compartments, there is a problem in that when an internal arc fault occurs in one compartment, high-temperature, high-pressure gas flows into another compartment from a gap in the pressure releasing plate connecting to the other compartment due to the pressure of the high-temperature, high-pressure gas flowing into the common pressure releasing duct chamber, and there is a possibility of a fault occurring in the other compartment too.

Also, an existing enclosed switchboard pressure releasing device disclosed in Patent Document 4 has a common pressure releasing chamber, in the same way as in Patent Document 3, but as previously described, there is a problem of high-temperature, high-pressure gas in the pressure releasing chamber flowing into another compartment.

Also, an existing enclosed switchboard disclosed in Patent Document 5 is such that a ventilating device formed of a perforated plate covering an outer wall aperture portion of a distribution box and an outer cover covering an upper portion of the perforated plate is disclosed, but there is a problem because a hole size does not take demand for both protection from a foreign object and ventilation into consideration, and a hole array does not take mechanical bending strength into consideration.

The invention, having been contrived in order to resolve the heretofore described kinds of problem, has an object of providing a gas-insulated switching device such that even when an internal fault occurs, the extent of the fault can be minimized.

### Solution to the Problem

A gas-insulated switching device according to the invention is characterized by including a cable chamber in which a power cable is housed, a circuit breaker chamber, disposed above the cable chamber, in which a circuit breaker is mounted, a bus chamber, disposed above the circuit breaker chamber, in which a bus is mounted, and pressure releasing plates installed above or in the rear of each of the cable chamber, circuit breaker chamber, and bus chamber, wherein a pressure releasing duct for leading a high-temperature, high-pressure gas discharged from each of the pressure releasing plates to an exterior when there is a rise in pressure in the circuit breaker chamber, the bus chamber, and the cable chamber is common to the circuit breaker chamber, the bus chamber, and the cable chamber. Further essential features are defined in claim 1.

### Advantageous Effects of the Invention

According to a gas-insulated switching device according to the invention, pressure releasing plates are installed above or in the rear of each of the cable chamber, the circuit breaker chamber, and the bus chamber, and a pressure releasing duct for leading a high-temperature, high-pressure gas discharged from each of the pressure releasing plates to an exterior when there is a rise in pressure in the circuit breaker chamber, the bus chamber, or the cable chamber is common to the circuit breaker chamber, the bus chamber, and the cable chamber, meaning that the high-temperature, high-pressure gas does not flow into another compartment, because of which a gas-insulated switching device such that the extent of a fault can be minimized can be provided.

Also, according to a gas-insulated switching device according to the invention, a bus chamber pressure releasing duct for leading a high-temperature, high-pressure gas discharged from a bus chamber to an exterior is independent, meaning that the bus chamber pressure releasing duct does not need to be extended, because of which the cost of the bus chamber pressure releasing duct can be reduced.

### Brief Description of the Drawings

- FIG. 1: is a sectional side view of a gas-insulated switching device shown in a first embodiment of the invention.
- FIG. 2: is a plan view of the gas-insulated switching device shown in FIG. 1 seen from an A direction.
- FIG. 3: is a sectional side view of a bus chamber and circuit breaker chamber of the gas-insulated switching device shown in FIG. 1 seen from a B-B direction.
- FIG. 4: is an expanded side view of a common pressure releasing duct, bus chamber pressure releasing duct, and circuit breaker chamber pressure releasing duct of the gas-insulated switching device shown in FIG. 1.
- FIG. 5: is a perspective view of FIG. 4.
- FIG. 6: is a back view of the common pressure releasing duct, wherein

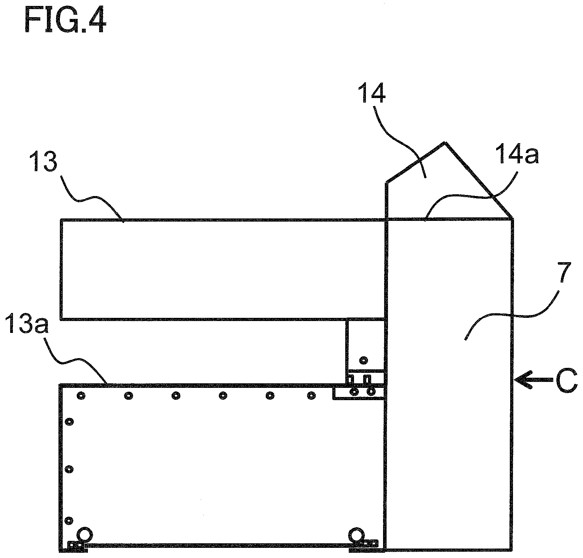

- FIG. 4: is seen from a C direction.

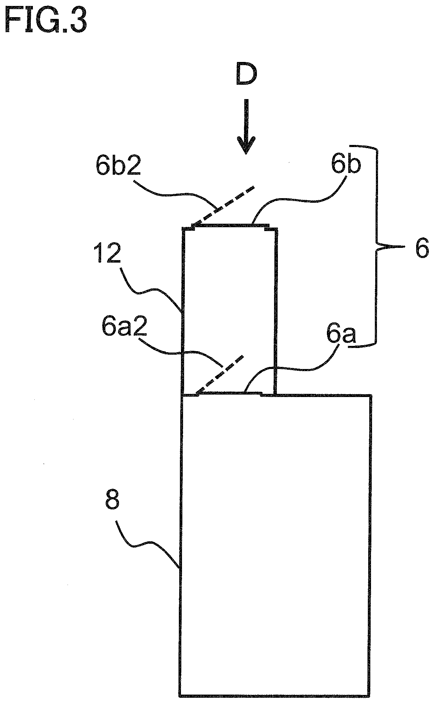

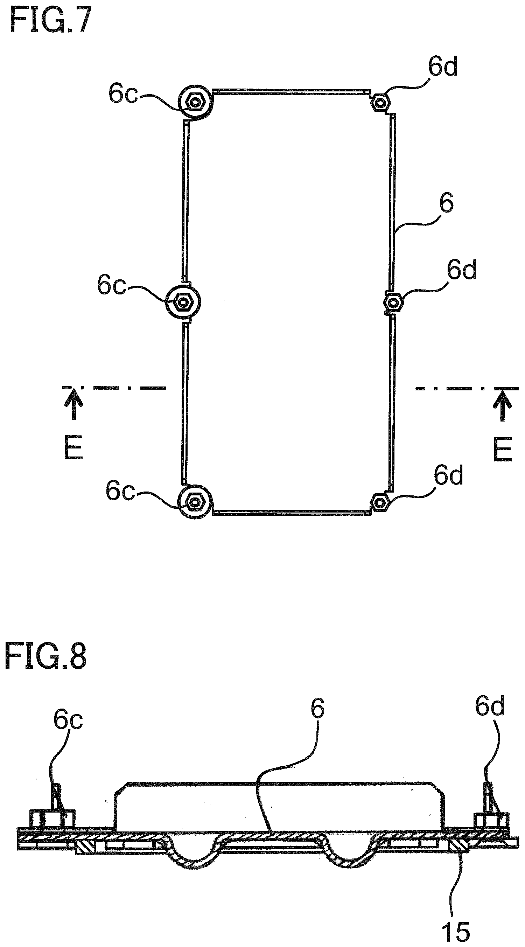

- FIG. 7: is a top view of a bus chamber or circuit breaker chamber pressure releasing plate seen from a D direction in FIG. 3.
- FIG. 8: is a sectional side view of the bus chamber or circuit breaker chamber pressure releasing plate seen from an E-E direction of FIG. 7.

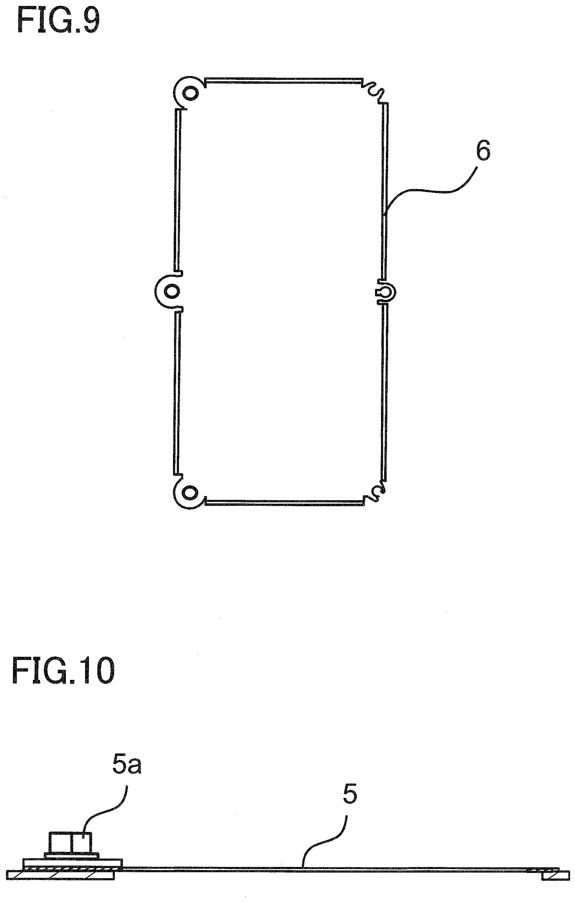

- FIG. 9: is a top view showing a pressure releasing plate single body wherein a fixing portion has been removed from the bus chamber or the circuit breaker chamber pressure releasing plate of FIG. 7.
- FIG. 10: is a sectional side view of the pressure releasing plate of the cable chamber shown in the first embodiment of the invention.

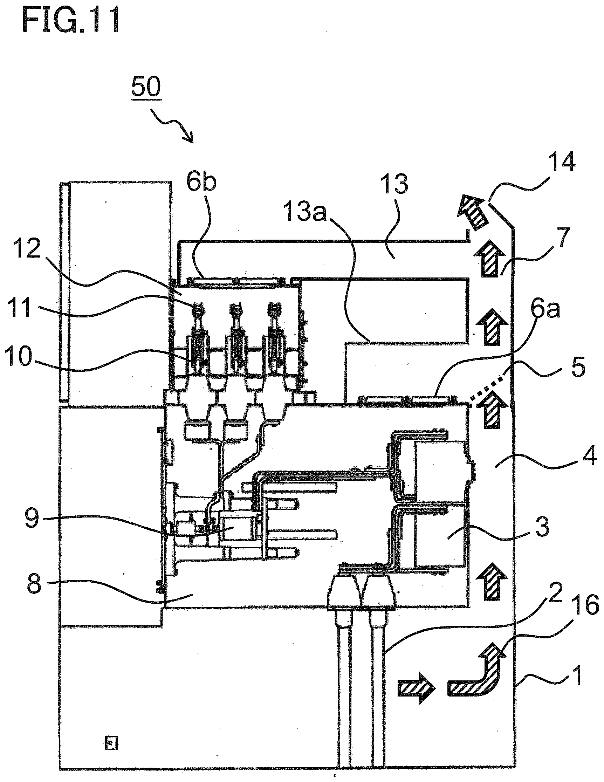

- FIG. 11: is a sectional side view showing a pressure releasing path when an internal arc fault occurs in the cable chamber of the gas-insulated switching device in the first embodiment of the invention.

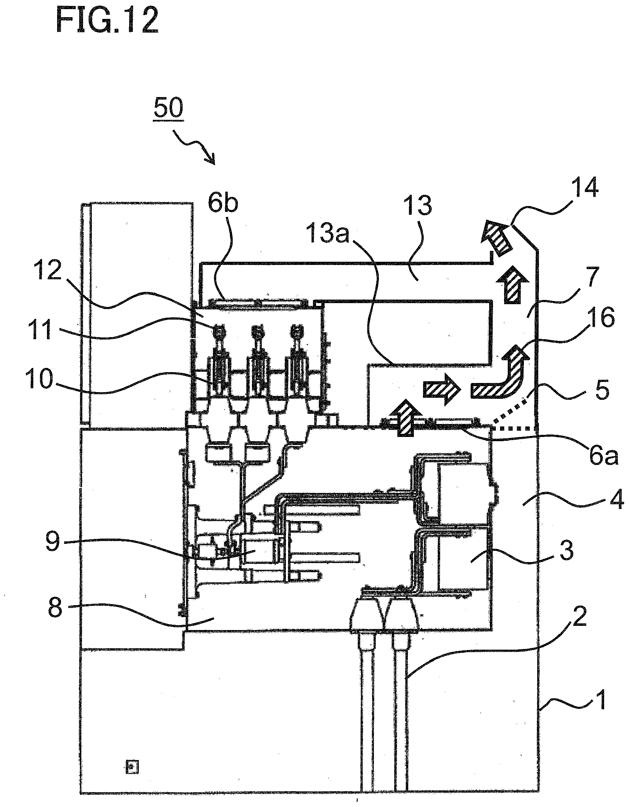

- FIG. 12: is a sectional side view showing a pressure releasing path when an internal arc fault occurs in the circuit breaker chamber of the gas-insulated switching device in the first embodiment of the invention.

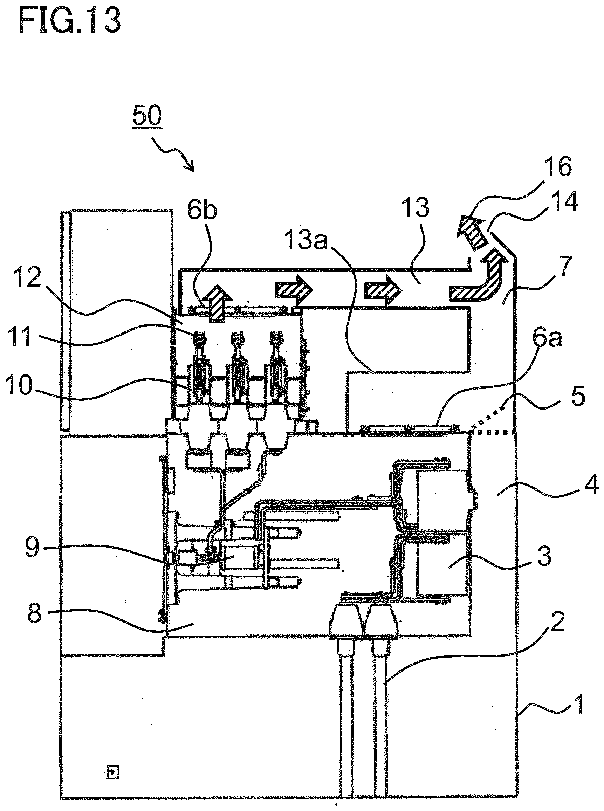

- FIG. 13: is a sectional side view showing a pressure releasing path when an internal arc fault occurs in the bus chamber of the gas-insulated switching device in the first embodiment of the invention.

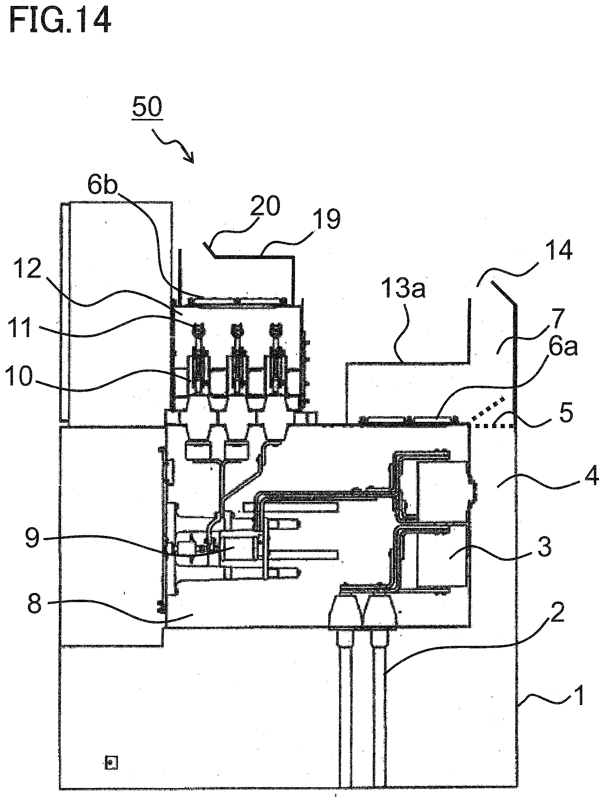

- FIG. 14: is a sectional side view of a gas-insulated switching device shown in a second embodiment of the invention.

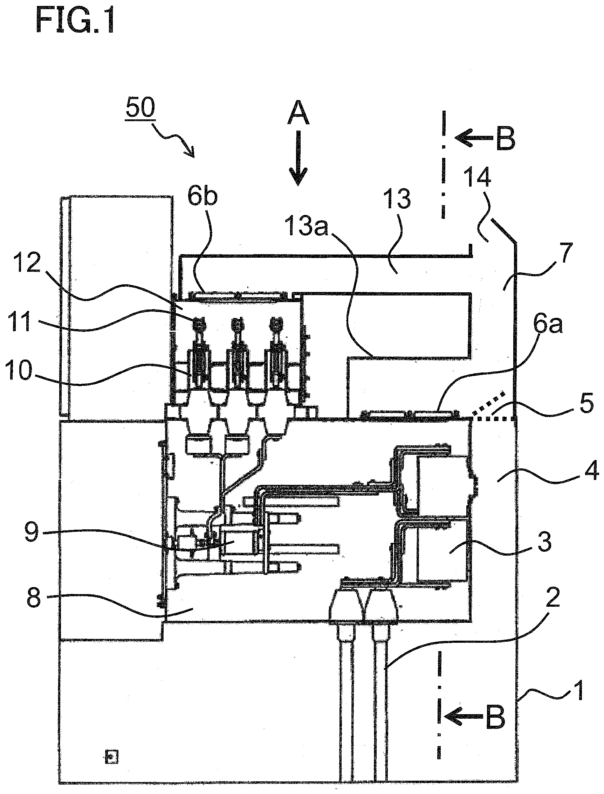

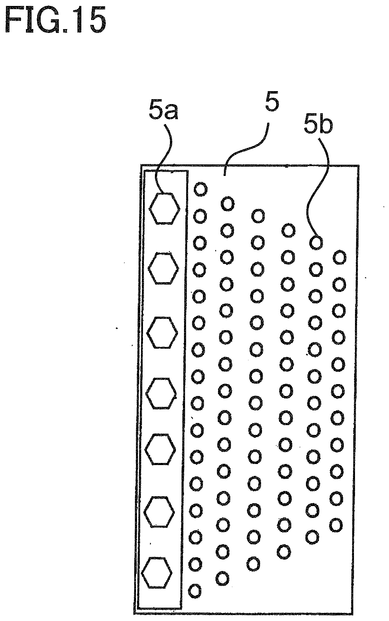

- FIG. 15: shows the cable chamber pressure releasing plate in a third embodiment of the invention, and is a plan view showing a state wherein the pressure releasing plate in FIG. 1 is closed.

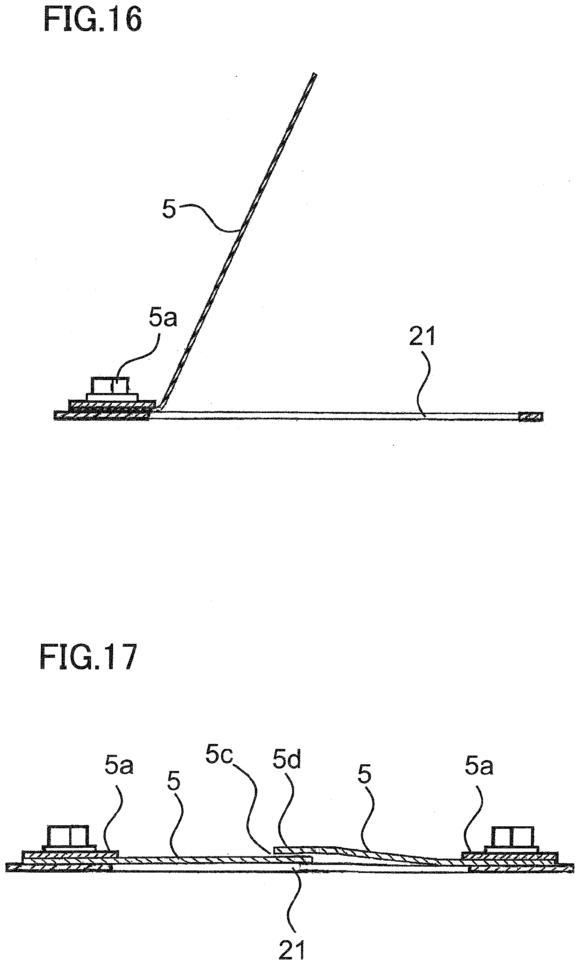

- FIG. 16: is a sectional side view of a state wherein the cable chamber pressure releasing plate of FIG. 15 is opened.
- FIG. 17: is a sectional side view showing the pressure releasing plate of the cable chamber in a fourth embodiment of the invention, and shows a state wherein the cable chamber pressure releasing plate in FIG. 1 is closed.

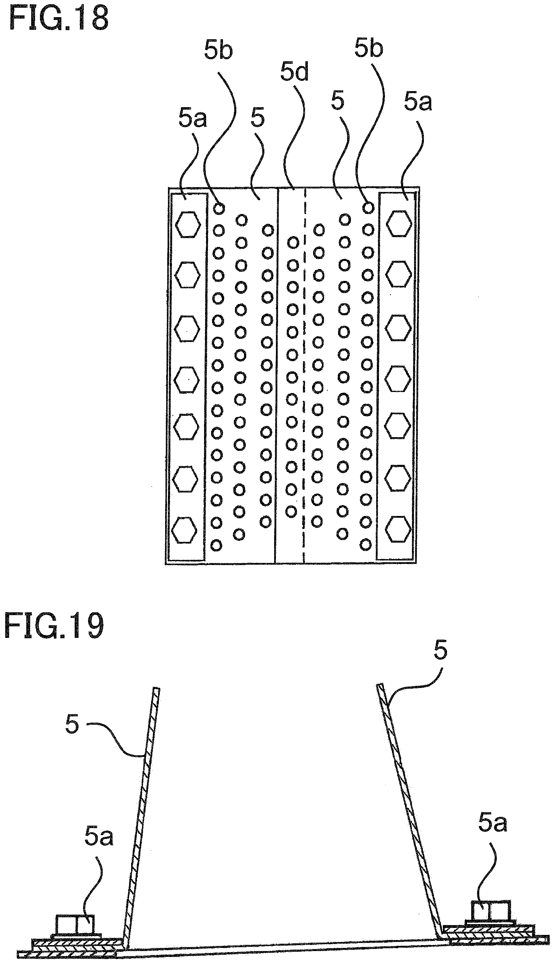

- FIG. 18: is a plan view showing a state wherein the cable chamber pressure releasing plate shown in FIG. 17 is closed.
- FIG. 19: is a sectional side view showing a state wherein the cable chamber pressure releasing plate shown in FIG. 17 is opened.

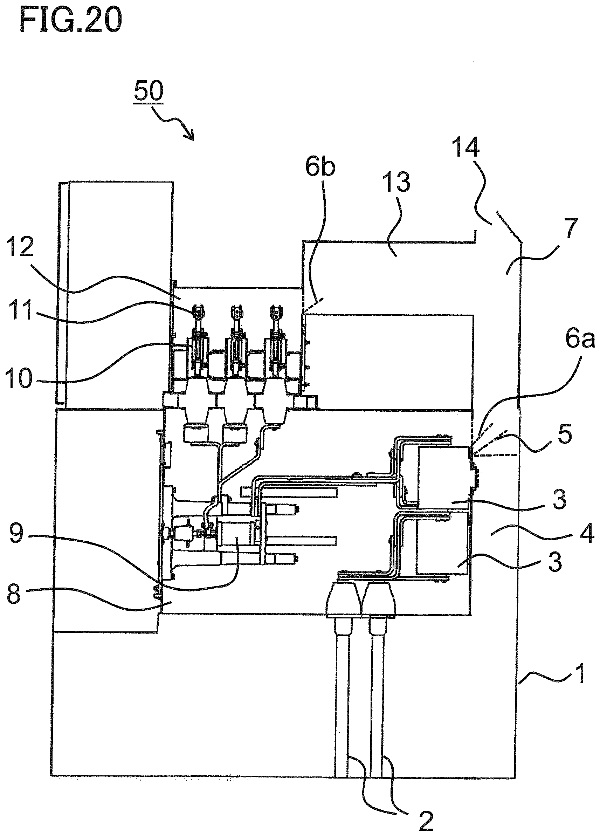

- FIG. 20: is a sectional side view of a gas-insulated switching device shown in a fifth embodiment of the invention.

### Description of Embodiments

### First Embodiment

Hereafter, based on the drawings, a first embodiment of the invention will be described. In the drawings, identical reference signs indicate identical or corresponding portions.

FIG. 1 is a sectional side view showing a gas-insulated switching device of the first embodiment of the invention. As shown in FIG. 1, a gas-insulated switching device 50 shown in the first embodiment of the invention includes a cable chamber 1 in a lower level, a circuit breaker chamber 8 in a middle level, and a bus chamber 12 in an upper level.

A power cable 2 is installed in the cable chamber 1, and a circuit breaker 9 and gauge current transformer 3 are installed in the circuit breaker chamber 8. Also, a bus 11 and a disconnector 10 are installed in the bus chamber 12. The circuit breaker chamber 8 and the bus chamber 12 are configured of pressure vessels, and by sulfur hexafluoride (SF6) gas, dry air, or the like being pressure sealed, an instrument and a main circuit conductor inside the pressure vessel are insulated by gas.

A pressure releasing plate 6a and a pressure releasing plate 6b attached to the circuit breaker chamber 8 and the bus chamber 12 respectively are of a form such that a metal plate of at least 2 mm or more is pressed into shape, and have a strength that can withstand the pressure in the pressure vessel. Also, a pressure releasing plate 5 attached to the cable chamber 1 is formed of a metal plate of 2 mm or less.

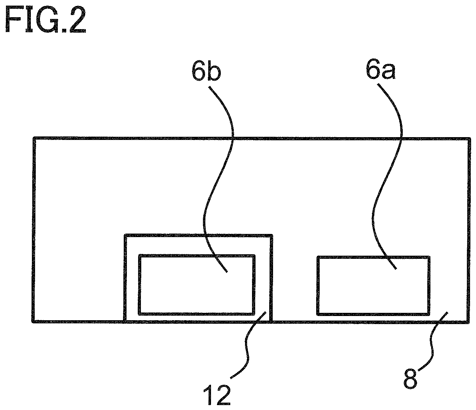

FIG. 2 is a plan view (top view) of the gas-insulated switching device shown in FIG. 1 seen from an A direction. As shown in FIG. 2, the pressure releasing plate 6a of the circuit breaker chamber 8 is provided above the circuit breaker chamber 8. Also, the bus chamber 12 is disposed on the circuit breaker chamber 8, and the pressure releasing plate 6b of the bus chamber 12 is disposed above the bus chamber 12.

Also, FIG. 3 is a sectional side view of the bus chamber and circuit breaker chamber of the gas-insulated switching device shown in FIG. 1 seen from a B-B direction (a back face side of the gas-insulated switching device 50). As shown in FIG. 3, the pressure releasing plate 6a of the circuit breaker chamber 8 opens in a direction shown in an opened state 6a2 when the pressure in the circuit breaker chamber 8 rises. Also, the pressure releasing plate 6b of the bus chamber 12 opens in a direction shown in an opened state 6b2 when the pressure in the bus chamber 12 rises.

Also, FIG. 4 is an expanded side view of a common pressure releasing duct 7, a bus chamber pressure releasing duct 13, and a circuit breaker chamber pressure releasing duct 13a of the gas-insulated switching device shown in FIG. 1. As shown in FIG. 1 to FIG. 3, high-temperature, high-pressure gas released from the pressure releasing plate 6a of the circuit breaker chamber 8 passes through the circuit breaker chamber pressure releasing duct 13a and the common pressure releasing duct 7, and is subsequently released from a discharge opening 14 provided above the common pressure releasing duct 7.

Also, high-temperature, high-pressure gas released from the pressure releasing plate 6b of the bus chamber 12 passes through the bus chamber pressure releasing duct 13 and the common pressure releasing duct 7, and is subsequently released from the discharge opening 14 provided above the common pressure releasing duct 7.

Furthermore, after passing from the cable chamber 1 through a cable chamber pressure releasing duct 4, high-temperature, high-pressure gas released from the pressure releasing plate 5 passes through the common pressure releasing duct 7, and is subsequently released from the discharge opening 14 provided above the common pressure releasing duct 7.

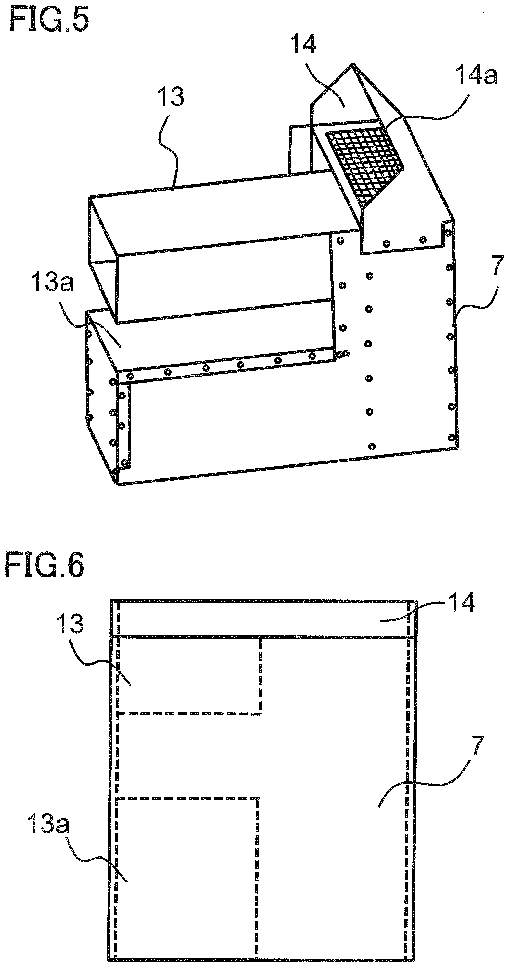

FIG. 5 is a perspective view of FIG. 4, and specifically, is a perspective view of the common pressure releasing duct 7 and the bus chamber pressure releasing duct 13. A net-form aperture portion 14a is attached to the discharge opening 14 of the common pressure releasing duct 7.

By the net-form aperture portion 14a being provided, high-temperature, high-pressure gas is discharged from the discharge opening 14, but a metal part discharged together with high-temperature, high-pressure gas from each of the circuit breaker chamber 8, the bus chamber 12, and the cable chamber 1 is prevented from being discharged to the exterior.

FIG. 6 is a back view of the common pressure releasing duct 7, wherein FIG. 4 is seen from a C direction. FIG. 6 shows a positional relationship between the bus chamber pressure releasing duct 13 and the circuit breaker chamber pressure releasing duct 13a when seen from a back side direction.

Also, FIG. 7 is a top view of the pressure releasing plate seen from a D direction in FIG. 3. The pressure releasing plate 6, which is the pressure releasing plate 6a and the pressure releasing plate 6b provided in the circuit breaker chamber 8 and the bus chamber 12 respectively, is fixed using fixing portions 6c and 6d. As shown in FIG. 7, the fixing portion 6c is fixed using, for example, an M10 size nut, and the fixing portion 6d is fixed using, for example, an M8 size nut or the like.

Also, as the strength of the fixing portion 6d is lower than the strength of the fixing portion 6c, the fixing portion 6d is released when there is a rise in pressure in the circuit breaker chamber 8 or the bus chamber 12, and the pressure releasing plate 6a and the pressure releasing plate 6b are opened as shown in the opened states 6a2 and 6b2, as shown in FIG. 3.

FIG. 8 is a sectional view of the pressure releasing plate of the circuit breaker chamber and the bus chamber shown in the first embodiment of the invention, and is a sectional side view of the pressure releasing plate wherein FIG. 7 is seen from an E-E direction. As shown in FIG. 8, the pressure releasing plate 6 is of a form such that a metal plate of at least 2 mm or more is pressed into shape, and has a strength that can withstand the pressure in the pressure vessel.

Also, the pressure releasing plate 6 is fixed using the fixing portions 6c and 6d across a packing 15. A structure is such that the fixing portion 6d is fixed using a nut of a smaller size than that fixing the fixing portion 6c, and when an internal arc fault occurs in the circuit breaker chamber 8 or the bus chamber 12 and the pressure inside the pressure vessel rises, the fixing portion 6d breaks, and the pressure releasing plate 6 opens.

Also, FIG. 9 is a top view showing a part of the pressure releasing plate of the circuit breaker chamber and the bus chamber shown in FIG. 7, and is a top view wherein the fixing nuts and washers of the fixing portion 6c and the fixing portion 6d shown in FIG. 7 are removed. As shown in FIG. 9, the fixing portion 6d of FIG. 7 is weaker in strength than the fixing portion 6c owing to a width of the plate on a periphery of a fixing hole being formed to be smaller than in the case of the fixing portion 6c.

Also, as shown in FIG. 1, the cable chamber pressure releasing duct 4 is installed above the cable chamber 1 and on a back face side of the circuit breaker chamber 8. The pressure releasing plate 5 corresponding to the cable chamber 1 is attached above the cable chamber pressure releasing duct 4.

FIG. 10 is a sectional side view of the pressure releasing plate of the cable chamber shown in the first embodiment of the invention. As shown in FIG. 10, the pressure releasing plate 5 corresponding to the cable chamber 1 is formed of a metal plate of 2 mm or less, and is of a structure such that one side only is fixed using a fixing portion 5a. As shown in FIG. 1 and FIG. 10, the pressure releasing plate 5 is of a structure that opens easily when the pressure in the cable chamber 1 and the cable chamber pressure releasing duct 4 rises.

As shown in FIG. 1, the common pressure releasing duct 7 is installed above the cable chamber pressure releasing duct 4, and the common pressure releasing duct 7 also communicates with the bus chamber pressure releasing duct 13. Also, the common pressure releasing duct 7 also communicates with the circuit breaker chamber pressure releasing duct 13a.

FIG. 11 is a side view showing a pressure releasing path when there is an internal arc in the cable chamber in the first embodiment of the invention. FIG. 11 shows a pressure releasing path of a high-temperature, high-pressure gas 16 when an internal arc fault occurs in the cable chamber 1 of the gas-insulated switching device 50. When an internal arc fault occurs in the cable chamber 1, the high-temperature, high-pressure gas 16 passes through the cable chamber pressure releasing duct 4 above the cable chamber 1.

The pressure releasing plate 5 of the cable chamber 1 opens due to a rise in pressure in the cable chamber 1 and the cable chamber pressure releasing duct 4, because of which the high-temperature, high-pressure gas 16 passes through the common pressure releasing duct 7, and is discharged to the device exterior from the discharge opening 14. Also, as the discharge opening 14 is inclined in a diagonally forward direction with respect to the gas-insulated switching device 50, the structure is such that the high-temperature, high-pressure gas 16 is discharged upward and forward.

As shown in FIG. 11, pressure is also applied to the pressure releasing plate 6a of the circuit breaker chamber 8 and the pressure releasing plate 6b of the bus chamber 12 by the high-temperature, high-pressure gas 16 when an internal arc occurs in the cable chamber 1, but although the pressure releasing plate 6a of the circuit breaker chamber 8 and the pressure releasing plate 6b of the bus chamber 12 have a hermetic sealing function and open when there is a rise in pressure caused by an internal arc in the interior of the pressure vessel, the pressure releasing plates 6a and 6b are of a strong structure with respect to a rise in pressure from the pressure vessel exterior, because of which the pressure releasing plate 6a of the circuit breaker chamber 8 and the pressure releasing plate 6b of the bus chamber do not open because of an internal arc in the cable chamber 1. Because of this, the circuit breaker chamber 8 and the bus chamber 12 are not damaged by an internal arc in the cable chamber 1.

FIG. 12 is a side view showing a pressure releasing path when there is an internal arc in the circuit breaker chamber in the first embodiment of the invention. FIG. 12 shows a pressure releasing path of the high-temperature, high-pressure gas 16 when an internal arc fault occurs in the circuit breaker chamber 8 of the gas-insulated switching device 50. When an internal arc occurs in the circuit breaker chamber 8, the pressure in the circuit breaker chamber 8 rises due to the high-temperature, high-pressure gas 16.

The pressure releasing plate 6a of the circuit breaker chamber 8 has a function of hermetic sealing with respect to the pressure of pressurized insulating gas in a state of normal usage, but is configured so as to open in response to a rise in pressure when an internal arc occurs. The high-temperature, high-pressure gas 16 in the circuit breaker chamber 8 causes the pressure releasing plate 6a of the circuit breaker chamber 8 to open, passes through the circuit breaker chamber pressure releasing duct 13a and the common pressure releasing duct 7, and is discharged from the discharge opening 14.

Also, as the discharge opening 14 is inclined in a diagonally forward direction with respect to the gas-insulated switching device 50, the structure is such that the high-temperature, high-pressure gas 16 is discharged upward and forward.

As shown in FIG. 12, pressure is also applied to the pressure releasing plate 6b of the bus chamber 12 by the high-temperature, high-pressure gas 16 when an internal arc fault occurs in the circuit breaker chamber 8, but although the pressure releasing plate 6b of the bus chamber 12 has a hermetic sealing function and opens when there is a rise in pressure caused by an internal arc in the interior of the pressure vessel, the pressure releasing plate 6b is of a strong structure with respect to a rise in pressure from the pressure vessel exterior, because of which the pressure releasing plate 6b of the bus chamber 12 does not open because of an internal arc fault in the circuit breaker chamber 8.

Also, although the pressure releasing plate 5 of the cable chamber 1 does not have a hermetic sealing function, a channel is formed above the pressure releasing plate 5 for the high-temperature, high-pressure gas 16 when there is an internal arc fault in the circuit breaker chamber 8, as shown in FIG. 12, because of which the high-temperature, high-pressure gas 16 does not flow into the cable chamber 1 below. Because of this, the cable chamber 1 and the bus chamber 12 are not damaged by an internal arc in the circuit breaker chamber 8.

FIG. 13 is a side view showing a pressure releasing path when there is an internal arc in the bus chamber in the first embodiment of the invention. FIG. 13 shows a pressure releasing path of the high-temperature, high-pressure gas 16 when an internal arc fault occurs in the bus chamber 12 of the gas-insulated switching device 50. When an internal arc occurs in the bus chamber 12, the pressure in the bus chamber 12 rises due to the high-temperature, high-pressure gas 16.

The pressure releasing plate 6b of the bus chamber 12 has a function of hermetic sealing with respect to the pressure of pressurized insulating gas in a state of normal usage, but is configured so as to open in response to a rise in pressure when an internal arc fault occurs. The high-temperature, high-pressure gas 16 in the bus chamber 12 causes the pressure releasing plate 6b of the bus chamber 12 to open, passes through the bus chamber pressure releasing duct 13 and the common pressure releasing duct 7, and is discharged from the discharge opening 14.

Also, as the discharge opening 14 is inclined in a diagonally forward direction with respect to the gas-insulated switching device 50, the structure is such that the high-temperature, high-pressure gas 16 is discharged upward and forward.

As shown in FIG. 13, pressure is also applied to the pressure releasing plate 6a of the circuit breaker chamber 8 by the high-temperature, high-pressure gas 16 when an internal arc occurs in the bus chamber 12, but although the pressure releasing plate 6a of the circuit breaker chamber 8 has a hermetic sealing function and opens when there is a rise in pressure caused by an internal arc in the interior of the pressure vessel, the pressure releasing plate 6a is of a strong structure with respect to a rise in pressure from the pressure vessel exterior, because of which the pressure releasing plate 6a of the circuit breaker chamber 8 does not open because of an internal arc fault in the bus chamber 12.

Also, although the pressure releasing plate 5 of the cable chamber 1 does not have a hermetic sealing function, a channel is formed above the pressure releasing plate 5 for the high-temperature, high-pressure gas 16 when there is an internal arc fault in the bus chamber 12, as shown in FIG. 13, because of which the high-temperature, high-pressure gas 16 does not flow into the cable chamber 1 below. Because of this, the cable chamber 1 and the circuit breaker chamber 8 are not damaged by an internal arc in the bus chamber 12.

In the first embodiment of the invention, as heretofore described, the gas-insulated switching device 50 having the circuit breaker chamber 8 in which the circuit breaker 9 is mounted, the bus chamber 12 in which the bus 11 is mounted, and the cable chamber 1 for housing the power cable 2 is of a configuration such that the lower level is the cable chamber 1, the middle level is the circuit breaker chamber 8, and the upper level is the bus chamber 12, and forms a gas-insulated structure wherein the cable chamber 1 is aerially sectioned off by a metal plate, and the circuit breaker chamber 8 and the bus chamber 12 are configured of hermetically sealed tanks.

The structure is such that the cable chamber 1, the circuit breaker chamber 8, and the bus chamber 12 have the pressure releasing plate 5, the pressure releasing plate 6a, and the pressure releasing plate 6b respectively, and the pressure releasing plate 6 (the pressure releasing plate 6a and the pressure releasing plate 6b) attached to the circuit breaker chamber 8 and the bus chamber 12 has a function of hermetically sealing the inside of the tank, and releases pressure only when an internal arc fault occurs in the circuit breaker chamber 8 or the bus chamber 12.

The structure is such that the cable chamber pressure releasing duct 4, the circuit breaker chamber pressure releasing duct 13a, and the bus chamber pressure releasing duct 13 of the cable chamber 1, the circuit breaker chamber 8, and the bus chamber 12 are connected by the common pressure releasing duct 7, but as the pressure releasing plate 6 (the pressure releasing plate 6a and the pressure releasing plate 6b) of the circuit breaker chamber 8 and the bus chamber 12 has a hermetic sealing function, the pressure releasing plate 6 of the circuit breaker chamber 8 and the bus chamber 12 does not open because of pressure in the common pressure releasing duct 7 even when, for example, the high-temperature, high-pressure gas 16 flows into the common pressure releasing duct 7 when an internal arc fault occurs in the cable chamber 1.

Also, although the pressure releasing plate 5 of the cable chamber 1 does not have a hermetic sealing function, the discharge path of the high-temperature, high-pressure gas 16 generated by an internal arc fault in the circuit breaker chamber 8 or the bus chamber 12 is controlled in an upward direction, because of which the high-temperature, high-pressure gas 16 from the circuit breaker chamber 8 or the bus chamber 12 does not flow into the cable chamber 1.

When the high-temperature, high-pressure gas 16 is generated, the high-temperature, high-pressure gas 16 is caused to collide with a wall in the common pressure releasing duct 7, and the common pressure releasing duct 7 changes the discharge direction to the upward direction.

Also, the structure is such that the high-temperature, high-pressure gas 16 that passes through the common pressure releasing duct 7 and is discharged from the discharge opening 14 is discharged into a space above the gas-insulated switching device 50, because of which there is no effect in a range in which a person is working in the periphery of the gas-insulated switching device 50.

### Second Embodiment

FIG. 14 is a side view of a gas-insulated switching device shown in a second embodiment of the invention. In the second embodiment, reference signs identical to those in the first embodiment are of the same configuration as in the first embodiment, because of which a description will be omitted. In the second embodiment, as shown in FIG. 14, a structure is such that a bus chamber pressure releasing duct 19 is not connected to the common pressure releasing duct 7, and the high-temperature, high-pressure gas 16 generated in the bus chamber 12 is released from a discharge opening (bus-use) 20 provided above the bus chamber pressure releasing duct 19. In the second embodiment, the bus chamber pressure releasing duct 13 does not need to be extended to the common pressure releasing duct 7, as is the case in the configuration shown in FIG. 1 of the first embodiment, because of which the cost of the bus chamber pressure releasing duct 13 can be reduced. When the gas-insulated switching device 50 is used in a row of boards, the bus 11 is connected, and power is fed to all boards in the row. As the bus chamber 12 is an important region for this purpose, the configuration in the second embodiment is such that the bus chamber pressure releasing duct 19 of the bus chamber 12 is not connected to the common pressure releasing duct 7.

Because of this, the configuration is such that the high-temperature, high-pressure gas 16 when an internal arc fault occurs in the cable chamber 1 or the circuit breaker chamber 8 never flows near the bus chamber 12, and there is no effect on the bus 11.

### Third Embodiment

FIG. 15 and FIG. 16 show the cable chamber pressure releasing plate in a third embodiment of the invention. FIG. 15 is a plan view showing the pressure releasing plate 5 of the cable chamber 1, and shows a state wherein the pressure releasing plate 5 in FIG. 1 is closed. Also, FIG. 16 is a sectional side view showing a state wherein the cable chamber pressure releasing plate 5 of FIG. 15 is opened. As shown in FIG. 15, a multiple of air holes 5b are provided in the pressure releasing plate 5 of the cable chamber 1, in a face covering a pressure releasing opening (cable chamber-use) 21.

The multiple of air holes 5b are opened in a state regularly arrayed at predetermined intervals, whereby air flows upward through the air holes 5b when the temperature in the cable chamber 1 rises owing to the power cable 2 being energized, because of which the rise in temperature in the cable chamber 1 can be restricted.

Also, in this case, as the air flows upward through the cable chamber pressure releasing duct 4, a side wall of the circuit breaker chamber 8 is cooled by the air flow, because of which a rise in temperature in the circuit breaker chamber 8 can also be restricted.

Regarding the size of the air hole 5b, the air hole 5b is a hole of a small diameter, regulated by IEC specifications (IEC-62271-1 "High Voltage Switchgear and Control Gear - Part 1: Common Specifications"), that can comply with protection rating IP3 or IP4 with respect to a foreign object from the exterior.

That is, the air hole 5b is of a size having a diameter of 2.5 mm or less when in the protection rating IP3 class, and of a size having a diameter of 1 mm or less when in the IP4 class. Because of this, requirements with respect to both ventilation and protection from a foreign object from the exterior of the gas-insulated switching device 50 can be satisfied.

Furthermore, as shown in FIG. 15, the pressure releasing plate 5 of the cable chamber 1 is configured in a state such that a side of one end portion is supported by the fixing portion 5a, and another end portion opposing the one end portion can open. Also, the multiple of air holes 5b are arrayed in a row, leaving intervals, along one end portion of the fixing portion 5a.

Further still, the multiple of air holes 5b are such that a multiple of the row arrayed along the one end portion of the fixing portion 5a are disposed so as to form a state wherein the number of the air holes 5b decreases as the rows are distanced from the fixing portion 5a side in the direction of the other end portion side.

The configuration is such that owing to the number of the air holes 5b being increased in a vicinity of the fixing portion 5a formed in the one end portion of the pressure releasing plate 5 of the cable chamber 1, and the number of the air holes 5b being reduced as the rows are distanced from the fixing portion 5a in the direction of the other end portion, the mechanical bending strength in the periphery of the fixing portion 5a of the pressure releasing plate 5 is weak in comparison with other places. This drop in mechanical bending strength can be rendered more noticeable by the air holes 5b being arrayed in a row along the one end portion of the fixing portion 5a, as shown in FIG. 15 and FIG. 16.

Because of this, when the pressure inside the cable chamber 1 rises due to an internal arc occurring in the cable chamber 1, the pressure releasing plate 5 easily bends upward with one end portion of the fixing portion 5a mounted on one side portion of an aperture portion of the pressure releasing opening 21 as a fulcrum, as shown in FIG. 16, as a result of which there is an advantage in that the pressure inside the cable chamber 1 can more easily be released toward the discharge opening 14.

The example shown is such that a large number of the air holes 5b are provided in an arrayed state in the face of the pressure releasing plate 5 covering the pressure releasing opening 21, but provided that a necessary ventilation area can be secured, a draft cooling advantage equivalent to that in the heretofore described embodiment can be obtained even when the air holes 5b are disposed in a random state rather than in an arrayed state.

### Fourth Embodiment

FIG. 17 to FIG. 19 show a fourth embodiment of the invention, wherein FIG. 17 is a sectional side view showing the pressure releasing plate 5 of the cable chamber 1, FIG. 18 is a plan view of the pressure releasing plate 5, and FIG. 19 is a sectional side view showing a state wherein the pressure releasing plate 5 is opened. In the third embodiment, there is one pressure releasing plate 5, but in the fourth embodiment of the invention, two pressure releasing plates 5 are used, and the fixing portion 5a of each pressure releasing plate 5 is mounted in either side portion of the aperture portion of the pressure releasing opening 21.

Opening side end portions of the two pressure releasing plates 5 are disposed so as to overlap each other, and a mutual positioning of the pressure releasing plates 5 in an overlapping portion 5d forms a gap 5c so that ventilation can be carried out.

As shown in FIG. 17, the fixing portion 5a formed in the one end portion of the pressure releasing plate 5 is fixed on either side of the pressure releasing opening 21, mounted so that leading end portions of the two pressure releasing plates 5 overlap. Also, the ventilation gap 5c is provided in a portion in which the leading end portions of the two pressure releasing plates 5 overlap.

Also, as shown in FIG. 18, a multiple of the air holes 5b are provided in an arrayed state in the pressure releasing plate 5. In the fourth embodiment of the invention, ventilation can be carried out not only from the air holes 5b but also from the gap 5c, which is advantageous in restricting a rise in temperature in the cable chamber 1.

Also, the two pressure releasing plates 5 are such that owing to the number of the air holes 5b in a portion near the fixing portion 5a being greater than in other places, the mechanical bending strength in the periphery of the fixing portion 5a of the pressure releasing plate 5 is weak. As a result of this, there is an advantage in that the pressure releasing plate 5 opens more easily when an internal arc occurs, as in FIG. 19.

This drop in mechanical bending strength can be rendered more noticeable by the air holes 5b being arrayed in a row along the one end portion of the fixing portion 5a, as shown in FIG. 17 to FIG. 19. Because of this, when the pressure inside the cable chamber 1 rises due to an internal arc occurring in the cable chamber 1, the pressure releasing plate 5 easily bends upward with one end portion of the fixing portion 5a mounted on one side portion of the aperture portion of the pressure releasing opening 21 as a fulcrum, as shown in FIG. 19, as a result of which there is an advantage in that the pressure inside the cable chamber 1 can more easily be released toward the discharge opening 14.

In order that the air hole 5b and the gap 5c secure protection against a foreign object from the exterior, a minute aperture portion is adopted so as to satisfy the conditions of the protection rating IP3 class or IP4 class, in the same way as in the third embodiment.

### Fifth Embodiment

FIG. 20 shows a sectional side view of the gas-insulated switching device 50 according to a fifth embodiment of the invention. The pressure releasing plate 6a and the pressure releasing plate 6b in the first embodiment to fourth embodiment are installed above the circuit breaker chamber 8 and the bus chamber 12 respectively, but in the fifth embodiment of the invention, the pressure releasing plate 6a and the pressure releasing plate 6b are installed so as to open backward in a rear portion of the circuit breaker chamber 8 and the bus chamber 12 respectively.

In FIG. 20, the pressure releasing plate (circuit breaker chamber-use) 6a that performs an operation of opening backward is provided in a rear portion of the circuit breaker chamber 8, and when an internal arc occurs in the circuit breaker chamber 8, the pressure releasing plate (circuit breaker chamber-use) 6a performs an operation of opening backward, whereby the high-temperature, high-pressure gas 16 inside the circuit breaker chamber 8 is discharged to the common pressure releasing duct 7.

Also, the pressure releasing plate (bus chamber-use) 6b that performs an operation of opening backward is provided in a rear portion of the bus chamber 12, and when an internal arc occurs in the bus chamber 12, the pressure releasing plate (bus chamber-use) 6b performs an operation of opening backward, whereby the high-temperature, high-pressure gas 16 inside the bus chamber 12 is discharged to the common pressure releasing duct 7.

The configurations of the first embodiment to fourth embodiment are such that after the high-temperature, high-pressure gas 16 is discharged toward a portion above the circuit breaker chamber 8 or the bus chamber 12, the rear-facing bus chamber pressure releasing duct 13 or the circuit breaker chamber pressure releasing duct 13a for leading the high-temperature, high-pressure gas 16 to the common pressure releasing duct 7 is further needed, but according to the configuration of the fifth embodiment of the invention, the circuit breaker chamber pressure releasing duct 13a is unnecessary, and the structure of the bus chamber pressure releasing duct 13 can be simplified, whereby the pressure releasing structure inside the gas-insulated switching device 50 can be simplified.

The embodiments of the invention can be freely combined, and each embodiment can be modified or abbreviated as appropriate, without departing from the scope of the invention.

### List of Reference Signs

- 1: Cable chamber
- 2: Power cable
- 3: Gauge current transformer
- 4: Cable chamber pressure releasing duct
- 5: Pressure releasing plate (cable chamber-use)
- 5a: Fixing portion
- 5b: Air hole
- 5c: Gap
- 5d: Overlapping portion
- 6: Pressure releasing plate (circuit breaker chamber-use or bus chamber-use)
- 6a: Pressure releasing plate (circuit breaker chamber-use)
- 6b: Pressure releasing plate (bus chamber-use)
- 6c: Fixing portion
- 6d: Fixing portion
- 7: Common pressure releasing duct
- 8: Circuit breaker chamber
- 9: Circuit breaker
- 10: Disconnector
- 11: Bus
- 12: Bus chamber
- 13: Bus chamber pressure releasing duct
- 13a: Circuit breaker chamber pressure releasing duct
- 14: Discharge opening (common pressure releasing duct-use)
- 14a: Net-form aperture portion
- 15: Packing
- 16: High-temperature high-pressure gas
- 19: Bus chamber pressure releasing duct
- 20: Discharge opening (bus-use)
- 21: Pressure releasing opening (cable chamber-use)
- 50: Gas-insulated switching device

## Claims

1. A gas-insulated switching device, comprising:
- a cable chamber (1) in which a power cable (2) is housed;
- a circuit breaker chamber (8), disposed above the cable chamber (1), in which a circuit breaker (9) is mounted;
- a bus chamber (12), disposed above the circuit breaker chamber (8), in which a bus (11) is mounted; and
- pressure releasing plates (5, 6a, 6b) installed above each of the cable chamber (1), the circuit breaker chamber (8) and the bus chamber (12),
- wherein a pressure releasing duct (7) for leading a high-temperature, high-pressure gas discharged from each of the pressure releasing plates (5, 6a, 6b) to an exterior when there is a rise in pressure in the circuit breaker chamber (8), the bus chamber (12), or the cable chamber (1) is common to the circuit breaker chamber (8), the bus chamber (12), and the cable chamber (1),
- wherein the circuit breaker chamber (8) and the bus chamber (12) are tank structures that can be hermetically sealed,
- wherein the pressure releasing plates (6a, 6b) attached to the circuit breaker chamber (8) and the bus chamber (12) have a hermetic sealing function,
- wherein the pressure releasing plate (5) of the cable chamber (1) does not have a hermetic sealing function,
- wherein the pressure releasing duct (7) is formed above the pressure releasing plate (5) of the cable chamber (1) so that the high-temperature, high-pressure gas from the circuit breaker chamber (8) and bus chamber (12) is prevented from flowing into the cable chamber (1), and
- wherein a plurality of air holes (5b) are provided in the pressure releasing plate (5) of the cable chamber (1), in a face covering a pressure releasing opening (21).

2. The gas-insulated switching device according to claim 1,
wherein the pressure releasing plate (5) of the cable chamber (1) is configured so that a side of one end portion is fixed by a supporting portion (5a) and another end portion opposing the one end portion can open, and wherein a plurality of rows of a row of the plurality of air holes (5b) arrayed along the one end portion of the supporting portion (5a) are disposed in a state wherein the number of the air holes (5b) decreases as the rows are distanced from the supporting portion (5a) in the direction of the other end portion.

3. The gas-insulated switching device according to claim 1 or 2,
wherein the pressure releasing duct (7) is configured to cause the high-temperature, high-pressure gas generated by an internal arc fault in the circuit-breaker chamber (8) or in the bus chamber (12) to collide with an upwardly extending inner wall of the pressure releasing duct (7), thereby changing a discharge direction to an upward direction.

4. The gas-insulated switching device according to any one of claims 1 to 3, wherein a discharge opening (14) is provided in a leading end portion of the pressure releasing duct (7), and
wherein the discharge direction of the high-temperature, high-pressure gas is controlled by the discharge opening being angled.

## Patentansprüche

1. Gasisolierte Schaltanlage, die Folgendes aufweist:
- eine Kabelkammer (1), in der ein Stromkabel (2) angeordnet ist;
- eine Leistungsschalter-Kammer (8), die über der Kabelkammer (1) angeordnet ist und in der ein Leistungsschalter (9) montiert ist;
- eine Bus-Kammer (12), die über der Leistungsschalter-Kammer (8) angeordnet ist und in der ein Bus (11) montiert ist; und
- Druckablassplatten (5, 6a, 6b), die über jeder von der Kabelkammer (1), der Leistungsschalter-Kammer (8) und der Bus-Kammer (12) installiert sind,
- wobei ein Druckablasskanal (7) zum Leiten eines Hochtemperatur-Hochdruck-Gases, das von jeder der Druckablassplatten (5, 6a, 6b) nach außen abgegeben wird, wenn ein Druckanstieg in der Leistungsschalter-Kammer (8), der Bus-Kammer (12), oder der Kabelkammer (1) auftritt, für die Leistungsschalter-Kammer (8), die Bus-Kammer (12), und die Kabelkammer (1) gemeinsam vorgesehen ist,
- wobei die Leistungsschalter-Kammer (8) und die Bus-Kammer (12) Behälterstrukturen sind, die hermetisch abgedichtet werden können,
- wobei die Druckablassplatten (6a, 6b), die an der Leistungsschalter-Kammer (8) und der Bus-Kammer (12) angebracht sind, eine hermetische Abdichtungsfunktion besitzen,
- wobei die Druckablassplatte (5) der Kabelkammer (1) keine hermetische Abdichtungsfunktion besitzt,
- wobei der Druckablasskanal (7) über der Druckablassplatte (5) der Kabelkammer (1) derart ausgebildet ist, dass das Hochtemperatur-, Hochdruck-Gas von der Leistungsschalter-Kammer (8) und der Bus-Kammer (12) daran gehindert wird, in die Kabelkammer (1) zu strömen, und
- wobei eine Vielzahl von Luftlöchern (5b) in der Druckablassplatte (5) der Kabelkammer (1) angeordnet ist, und zwar in einer Fläche, die eine Druckablassöffnung (21) abdeckt.

2. Gasisolierte Schaltanlage nach Anspruch 1,
wobei die Druckablassplatte (5) der Kabelkammer (1) derart ausgebildet ist, dass eine Seite von dem einen Endbereich mittels eines Stützbereichs (5a) fixiert ist, und dass ein anderer Endbereich, der dem einen Endbereich gegenüberliegt, öffnen kann, und
wobei eine Vielzahl von Reihen, von einer Reihe von der Vielzahl von Luftlöchern (5b), die entlang des einen Endbereichs des Stützbereichs (5a) angeordnet sind, in einem solchen Zustand angeordnet sind, dass die Anzahl der Luftlöcher (5b) in dem Maße abnimmt, in dem die Reihen von dem Stützbereich (5a) in der Richtung des anderen Endbereichs beabstandet sind.

3. Gasisolierte Schaltanlage nach Anspruch 1 oder 2,
wobei der Druckablasskanal (7) dazu ausgebildet ist, zu bewirken, dass das Hochtemperatur-Hochdruck-Gas, das durch einen internen Lichtbogenfehler in der Leistungsschalter-Kammer (8) oder in der Bus-Kammer (12) erzeugt worden ist, gegen eine sich nach oben erstreckende Innenwand des Druckablasskanals (7) prallt, und dadurch eine Entladungsrichtung in eine nach oben gerichtete Richtung geändert wird.

4. Gasisolierte Schaltungsvorrichtung nach einem der Ansprüche 1 bis 3, wobei eine Auslassöffnung (14) in einem vorderen Endbereich des Druckablasskanals (7) angeordnet ist, und
wobei die Entladungsrichtung des Hochtemperatur-Hochdruck-Gases dadurch gesteuert wird, dass die Auslassöffnung (14) unter einem Winkel angeordnet ist.

## Revendications

1. Dispositif de commutation isolé au gaz, comprenant :
- une chambre de câble (1) dans laquelle est logé un câble d'alimentation (2) ;
- une chambre de disjoncteur (8), disposée au-dessus de la chambre de câble (1), dans laquelle est monté un disjoncteur (9) ;
- une chambre de bus (12), disposée au-dessus de la chambre de disjoncteur (8), dans laquelle est monté un bus (11) ; et
- des plaques de libération de pression (5, 6a, 6b) installées au-dessus de chacune de la chambre de câble (1), de la chambre de disjoncteur (8) et de la chambre de bus (12),
- dans lequel un conduit de libération de pression (7) pour conduire un gaz à haute température et haute pression déchargé depuis chacune des plaques de libération de pression (5, 6a, 6b) vers un extérieur lorsqu'il se produit une augmentation de la pression dans la chambre de disjoncteur (8), la chambre de bus (12) ou la chambre de câble (1) est commun à la chambre de disjoncteur (8), à la chambre de bus (12) et à la chambre de câble (1),
- dans lequel la chambre de disjoncteur (8) et la chambre de bus (12) sont des structures de réservoir qui peuvent être scellées hermétiquement,
- dans lequel les plaques de libération de pression (6a, 6b) fixées à la chambre de disjoncteur (8) et à la chambre de bus (12) ont une fonction de scellement hermétique,
- dans lequel la plaque de libération de pression (5) de la chambre de câble (1) n'a pas de fonction de scellement hermétique,
- dans lequel le conduit de libération de pression (7) est formé au-dessus de la plaque de libération de pression (5) de la chambre de câble (1) de telle sorte que le gaz à haute température et haute pression provenant de la chambre de disjoncteur (8) et de la chambre de bus (12) est empêché de s'écouler dans la chambre de câble (1) et
- dans lequel une pluralité de trous d'air (5b) est prévue dans la plaque de libération de pression (5) de la chambre de câble (1), dans une face recouvrant une ouverture de libération de pression (21).

2. Dispositif de commutation isolé au gaz selon la revendication 1,
dans lequel la plaque de libération de pression (5) de la chambre de câble (1) est configurée de telle sorte qu'un côté d'une partie d'extrémité est fixé par une partie de support (5a) et qu'une autre partie d'extrémité opposée à la première partie d'extrémité peut s'ouvrir, et dans lequel une pluralité de rangées d'une rangée de la pluralité de trous d'air (5b) agencée le long d'une partie d'extrémité de la partie de support (5a) sont disposées dans un état dans lequel le nombre de trous d'air (5b) diminue à mesure que les rangées s'éloignent de la partie de support (5a) en direction de l'autre partie d' extrémité.

3. Dispositif de commutation isolé au gaz selon la revendication 1 ou 2,
dans lequel le conduit de libération de pression (7) est configuré pour amener le gaz à haute température et haute pression généré par un défaut d'arc interne dans la chambre de disjoncteur (8) ou dans la chambre de bus (12) à entrer en collision avec une paroi intérieure s'étendant vers le haut du conduit de libération de pression (7), changeant ainsi une direction de décharge vers le haut.

4. Dispositif de commutation isolé au gaz
selon l'une quelconque des revendications 1 à 3,
dans lequel une ouverture de décharge (14) est prévue dans une partie d'extrémité avant du conduit de libération de pression (7) et
dans lequel la direction de décharge du gaz à haute température et haute pression est commandée par le fait que l'ouverture de décharge est inclinée.
